# EUROPEAN PATENT APPLICATION

(11) **EP 4 542 522 A1**
(43) Date of publication of application: **23.04.2025**
(21) Application number: 23203819.0
(22) Date of filing: 16.10.2023
(51) Int. Cl.: G08G 1/00, B60W 30/10, B62D 15/02, G01S 13/931

(54) **METHOD OF OPERATING A VEHICLE CONVOY, VEHICLE AND SYSTEM FOR COUPLING THE MOVEMENTS OF AT LEAST TWO VEHICLES**

(71) Applicant: Kopernikus Automotive GmbH, 04179 Leipzig (DE)
(72) Inventor: JENZOWSKY, Stefan, 91325 Adelsdorf (DE)
(74) Representative: Seemann & Partner Patentanwälte mbB

(57) **Abstract**

The disclosure relates, inter alia, to a method of operating a vehicle convoy, the vehicle convoy comprising a leader vehicle and at least one follower vehicle following the leader vehicle, wherein the method comprises the following steps:
- the leader vehicle generating a control command for the at least one follower vehicle, wherein the control command comprises a current timestamp and a drive action to be performed by the at least one follower vehicle and a spatial and/or temporal condition to be fulfilled prior to carrying out the drive action, wherein the drive action comprises at least one of steering the at least one follower vehicle, changing the speed of the at least one follower vehicle and setting the speed of the at least one follower vehicle,
- the leader vehicle transmitting the control command to the at least one follower vehicle,
- the at least one follower vehicle receiving the control command from the leader vehicle,
- the at least one follower vehicle carrying out the drive action comprised in the received control command when the spatial and/or temporal condition comprised in the received control command is fulfilled.

## Description

The invention relates to a method of operating a vehicle convoy comprising a leader vehicle and at least one follower vehicle following the leader vehicle. Furthermore, the invention relates to a vehicle as well as to a system for coupling the movements of at least two vehicles.

Nowadays, methods are known for controlling a vehicle, in particular a road vehicle, completely remotely. For example, automated valet parking is a method for parking a vehicle left by its driver at a drop-off point and, from there, the vehicle drives automatically into a parking position and/or returns to the drop-off point on request. Such system are, inter alia, shown in DE 10 2012 222 562 A1 or WO 2016/128203 A1.

Such remotely controlled vehicles are used in particular in self-contained areas, such as parking facilities, factory premises or logistics facilities. A vehicle may be, e.g., an automobile, a truck, a bus, a forklift truck or a trailer. The field of logistics is particularly well developed regarding remotely controlled vehicles. For example, forklift trucks may move around a storage facility automatically, guided by internal and/or external sensors on pre-defined paths.

On another note, generally, the more capacity a vehicle offers, the higher its efficiency in transporting people and/or goods will be. Thus, articulated buses or even double-articulated buses are used in public transport to move more people with only one driver. In some regions of the world, it is discussed to increase the permissible length of large goods vehicles, e.g. to allow longer and heavier vehicles (LHVs) exceeding a length of 18.75m, known in Germany as "Gigaliners".

Another option to increase cargo capacity is to couple a leader vehicle with a following vehicle. For this, mechanical drawbars are well-known. A drawbar is a solid coupling between a hauling vehicle and its hauled load. Drawbars are in common use with rail transport, road trailers, both large and small, industrial and recreational, and with agricultural equipment. Australian road trains using such mechanical drawbars can reach lengths of over 50 m.

It is an object of the invention to increase the transport capacity and/or transport efficiency of the vehicles by improving the coupling of at least two vehicles moving together in order.

The object is achieved by a method of operating a vehicle convoy, the vehicle convoy comprising a leader vehicle and at least one follower vehicle following the leader vehicle, wherein the method comprises the following steps:
- the leader vehicle generating a control command for the at least one follower vehicle,
   wherein the control command comprises a current timestamp and a drive action to be performed by the at least one follower vehicle and a spatial and/or temporal condition to be fulfilled prior to carrying out the drive action,
   wherein the drive action comprises at least one of steering the at least one follower vehicle, changing the speed of the at least one follower vehicle and setting the speed of the at least one follower vehicle,
- the leader vehicle transmitting the control command to the at least one follower vehicle,
- the at least one follower vehicle receiving the control command from the leader vehicle,
- the at least one follower vehicle carrying out the drive action comprised in the received control command when the spatial and/or temporal condition comprised in the received control command is fulfilled.

A basic idea of the invention is that a leader vehicle moves along a path and is followed by at least one follower vehicle. In order to do so, the at least one follower vehicle is virtually chained to the leader vehicle, which provides control commands comprising drive actions, such as steering or changing the speed of a follower vehicle. The leader vehicle may be driven by a human or may be controlled remotely. Hence, the method of operating a vehicle convoy provides a connection akin to a virtual drawbar between a leader vehicle and at least one follower vehicle. The vehicle convoy moves jointly without the need of a mechanical connection between the vehicles.

This allows for a simple coupling of various vehicles into one vehicle convoy, which provides high transport capacity while being operated by only one person or even no person. Multiple vehicles may follow the leader vehicle carrying further passengers or goods, automatically moving along the leader vehicle's path or a path described by the leader vehicle. This increases the transport efficiency significantly. Furthermore, by electronically coupling the vehicles, a mechanical connection requiring maintenance, in particular when being exposed to weather conditions, is not required.

When vehicles are coupled by a mechanical drawbar, like a so-called A-bar, this rigid device usually takes on two tasks. Firstly, the drawbar ensures that the follower vehicle is pulled by the leading vehicle at a constant distance between a leader vehicle and the follower vehicle. The follower vehicle usually does not use its own propulsion while being drawn in this way. Secondly, the drawbar can steer the follower vehicle by exerting a force on a steering axle of the follower vehicle when the leading vehicle drives left or right. As the method according to the invention does not require a mechanical drawbar, both of these tasks have to be executed differently.

With respect to the first task, the method of operating a vehicle convoy according to the invention involves the follower vehicle driving under its own propulsion, since it is not being pulled mechanically. This allows for varying distances between the leader vehicle and the at least one follower vehicle. As the leader vehicle transmits control commands with drive actions to affect the movements of the at least one follower vehicle, the leader vehicle may choose the control commands in such a way that the follower vehicle follows the leader vehicle at a set distance. The actual distance will vary when the convoy accelerates or decelerates, but the set distance will be achieved under stable driving conditions.

Such a set distance may be adjusted to take account of current circumstances of the drive situation of the vehicles, such as a speed dependent braking distance. At high speeds, a larger set distance may be suitable than at lower speeds. When maneuvering in a tight logistics facility with low speed, a smaller set distance between the vehicles may be chosen. The possibility of varying the set distance between vehicles of the vehicle convoy allows for higher safety of the convoy, because in the case of an accident, one vehicle might crash, but the other vehicles might safely brake before becoming part of the accident due to sufficiently long distances between the vehicles. When the convoy comes to a halt, e.g., in front of a red light, the set distance may be made small so that the vehicles of the convoy come to a stop bumper to bumper in effect.

When at high speed on a public street, such as a highway, the set distance may be set large enough to allow other vehicles to overtake and turn in between vehicles of the convoy. In this case a follower vehicle in front of which a non-convoy vehicle has placed itself may recognize this, e.g., using its radar or LIDAR range detection capability, which may be part of an onboard adaptive cruise control (ACC) system, and signal this to the leader vehicle, which adjusts the set distance accordingly, until the non-convoy vehicle has left the convoy.

The distances between a leader vehicle and the at least one follower vehicle, hence, are governed by the control commands transmitted from the leader vehicle to the at least one follower vehicle, possibly modified by radar or LIDAR assisted safety systems of the follower vehicles. It is an aspect of the invention that the control commands may be generated such as to account for the current vehicle movement, such as in terms of speed or curviness of the path, so that a suitable distance between leader vehicle and the at least one follower vehicle is maintained and that the at least one follower vehicle follows the leader vehicle along a suitable path. Identifying these suitable distances and paths and determining the corresponding control commands is performed by the leader vehicle when generating the control command.

While a mechanical drawbar exerts a mechanical force and, thus, a steering effect, on a follower vehicle, without delay, processing and transmitting control commands contains a latency between the occurrence of a drive action in the leader vehicle and the time a control command reflecting such drive action is received and decoded by a follower vehicle. In particular, such latency originates from a latency of generating the control command in the leader vehicle and a latency of processing the control command in the follower vehicle. Furthermore, such a processing latency comprises a network latency from the, in particular wireless, communication between a leader vehicle and the at least one follower vehicle.

This latency significantly complicates the task of driving in convoy with respect to towing a vehicle using a drawbar. Consequently, such latencies have to be addressed when generating the control command. The method according to the present disclosure achieves this through generating appropriate spatial and/or temporal conditions for the drive actions to be carried out. Furthermore, the point in time for transmitting the control command may be chosen according to a current amount of latency. In an example, a follower vehicle may be advised through a control command to perform a drive action, e.g., steering in a predefined direction, after having waited for a given amount of time. This waiting time constitutes a temporal condition embedded in the control command. If in this scenario a follower vehicle has identified to have a processing latency of 200 ms for the time interval between checking the spatial and/or temporal condition and effectively steering the vehicle, this processing latency may be communicated to the leader vehicle, which will subtract 200 ms from the temporal condition, i.e., the time interval to be waited before the drive action is performed, in its next control command to the follower vehicle, thereby accounting for the follower vehicle's current latency in the temporal condition. Alternatively, the leader vehicle may send the respective control command 200 ms earlier.

Apart from potentially unwanted processing latencies, using a communication connection instead of a mechanical drawbar allows for control commands being adapted individually to each driving situation. While generating a control command for the at least one follower vehicle, the leader vehicle may take into account the drive action to be performed by the at least one follower vehicle. For example, the spatial and/or temporal condition may be adjusted according to the drive action to be carried out. For example, the leader vehicle may request the at least one follower vehicle to brake immediately when the control command is received, e.g., in case of an emergency. When accelerating, e.g. when the convoy is starting at a traffic light, the leader vehicle may request a fixed time delay, so that the at least one follower vehicle waits until it starts accelerating and following the leader vehicle. Furthermore, an acceleration command within a convoy may be delayed in order to increase the distance between the leader and a follower vehicle.

Furthermore, the control commands may be adapted individually to each follower vehicle. The follower vehicles may be of different makes, models, have different engines and brake systems and therefore different acceleration and deceleration profiles, as well as processing latencies. Adapting the control commands individually may aid in ensuring a uniform drive response by all vehicles of the convoy.

In a simple embodiment, the at least one follower vehicle follows each drive action performed by the leader vehicle. Thus, the at least one follower vehicle copies the path and movement of the leader vehicle.

In a more advanced embodiment, and in keeping with the examples given above, the leader vehicle may take into account the drive action to be performed by the at least one follower vehicle while generating a control command for the at least one follower vehicle. For example, the spatial and/or temporal condition embedded in the control command may be adjusted according to the drive action to be carried out. Thus, the leader vehicle may request a follower vehicle to carry out a drive action with a given time delay and, in particular, such time delay may be adapted to the requested drive action.

Each control command of the method of the present disclosure comprises a current timestamp, a drive action as well as a spatial and/or temporal condition. The timestamp may, by convention, indicate the time a drive action has taken place in the leader vehicle or the time of generating the control command, thus already incorporating a latency between the drive action taking place and the control command being created. The spatial and/or temporal condition constitutes a parameterized indication of when and/or where the drive action shall be performed. Furthermore, a control command may comprise an addressee, naming which follower vehicle is requested to carry out the drive action. In addition, the communication between leader vehicle and the at least one follower vehicle will be more stable if a follower vehicle acknowledges receiving a control command from the leader vehicle. The transmission of a control command may be repeated in short intervals until an acknowledgement by the follower vehicle is received by the leader vehicle. A maximum acknowledgement time may be given with the consequence that if an acknowledgement is not received within the maximum acknowledgement time, the convoy may be brought to a gentle stop by the leader vehicle, ensuring the safety of the convoy's movement as well as of other traffic participants.

The vehicles may be one of an automobile, a truck, a bus, a forklift truck, a trailer or a rail-bound vehicle. Rail-bound vehicles include passenger trains, such as trains suitable for high-speed rail systems like the Intercity Express, or cargo trains of any size, e.g. long-distance cargo trains or small vehicles for logistics within a warehouse. The method may also be implemented on board of ships, such as cargo ships, or in port areas with cargo rails.

In embodiments, the spatial and/or temporal condition is at least one of

| | |
|---|---|
| (x1) | that the at least one follower vehicle has travelled a given distance since the time of the timestamp, wherein in particular the given distance is specified by the leader vehicle, |
| (x2) | that the at least one follower vehicle has travelled to the leader vehicle's position of the time of the timestamp, wherein in particular the leader vehicle's position of the time of the timestamp is determined by the at least one follower vehicle, |
| (x3) | that the at least one follower vehicle has travelled to given absolute coordinates, |
| (t1) | that a given period of time has passed since the time of the timestamp, wherein in particular the given period of time is determined by the leader vehicle or the at least one follower vehicle, and |
| (t2) | that a given absolute point in time is reached. |

These spatial and/or temporal conditions allow for a precise control of the at least one follower vehicle. For example, similar to the condition (x2), the spatial and/or temporal condition may be that the at least one follower vehicle has travelled a predefined distance, wherein the predefined distance is the distance between the leader vehicle and the at least one follower vehicle at the time of the timestamp.

For determining the distances, in particular for the conditions (x1), (x2) and (x3), the leader vehicle and/or the at least one follower vehicle may record their location and/or distance to at least one other vehicle over time. Furthermore, distances can be approximated by speed data recorded over time.

Condition (x2) is simple to generate for the leader vehicle, because in simple terms the condition reads "Carry out the drive action when you are where I am now". However, that position still has to be determined, for example by the at least one follower vehicle. This position may be obtained by recording the distance between the leader vehicle and at least one follower vehicle over time, recording also the timestamp, so that when a control command including a timestamp and condition (x2) is received, the at least one follower vehicle may calculate the positions and determine when the condition is fulfilled.

In this respect, condition (x1) is simpler, as the leader vehicle may detect or possess knowledge of the distance between the leader vehicle and the at least one follower vehicle at the time of generating the command control including the timestamp. The leader vehicle may learn about the distance from communication signals from the follower vehicle to the leader vehicle containing time stamps and position or speed information of the follower vehicle, and comparing those information with its own position and timing. As long as the at least one follower vehicle records how far the at least one follower vehicle has travelled since the time of the timestamp, it is possible to calculate how much further the at least one follower vehicle has to travel to fulfill the spatial and/or temporal condition.

Each of the given spatial and/or temporal conditions (x1), (x2), (x3), (t1) and (t2) is suitable for different drive actions and/or situations. While temporal condition (t1) may be most suitable for braking, since it may be suitable to choose temporal condition (t1) with a very short period of time to have passed since the time stamp for braking, thus enhancing the safety of operation, a distance-based condition such as (x1) may be a better fit for the action of steering in another direction, thereby ensuring that each vehicle of the convoy follows the same curved path. However, the various types of conditions can all be defined and implemented such as to ensure safety and accuracy of convoy operation at all times.

To further optimize the method concerning control commands, in embodiments, the method further comprises the leader vehicle choosing the spatial and/or temporal condition and/or the point in time for transmitting the control command in consideration of the drive action and/or of a processing latency of processing the control command within the vehicle convoy, wherein in particular the processing latency is a latency of generating the control command in the leader vehicle and/or communicating between leader vehicle and the at least one follower vehicle and/or processing the control command in the at least one follower vehicle.

Choosing the spatial and/or temporal condition and/or the point in time for transmitting the control command with respect to the drive action allows for choosing a suitable condition for a given drive action. For example, the leader vehicle may request the at least one follower vehicle to brake immediately when the control command is received, e.g., in case of an emergency. When accelerating, e.g. when the convoy is starting at a traffic light, the leader vehicle may request a fixed time delay, so that the at least one follower vehicle waits until it starts accelerating and following the leader vehicle. Drive actions including steering are very sensitive with respect to their position. Thus, a spatial condition such as (x1), (x2) or (x3) may be chosen.

The issue of mismatch in the accelerating and braking capability of the different vehicles may be addressed in various ways. In one embodiment, a control command comprising an acceleration action or a brake action may further comprise a setpoint or a limit for the acceleration or braking to be applied by the at least one follower vehicle. The setpoint or limit may be adjusted to live within the specifications of every one of the vehicles including the leader vehicle. In an alternative embodiment, which may be combined with the previously described embodiment, modern vehicles are frequently equipped with onboard systems for range detection towards a preceding vehicle, for example based on radar or LIDAR, or adaptive cruise control (ACC), and will automatically adjust their acceleration or braking such that a minimum distance to a preceding vehicle is not undershot.

Furthermore, the spatial and/or temporal condition and/or the point in time for transmitting the control command may be chosen taking a processing latency of processing the control command within the vehicle convoy into account. This holds the advantage of including processing delays, happening willingly or unwillingly during the steps of processing, into the control command and therefore increasing the precision of movement of the vehicle convoy.

The processing latency may include a network latency arising from a, in particular wireless, communication between the leader vehicle and the at least one follower vehicle. Network latency increases with more network traffic, e.g. if the at least one follower vehicle acknowledges every control command received.

For example, if a processing latency within the leader vehicle or within a follower vehicle is known, a spatial and/or temporal condition may be chosen to additionally include the amount of time of the processing latency. If the processing latency adds up to 100 ms and the spatial and/or temporal condition is to wait for 1 second, this usually adds up to 1100 ms of waiting time. If the latency is known, the condition may be decreased to 900 ms, so that the actual waiting time becomes 1000 ms. In a similar way spatial and/or temporal conditions of having travelled a predefined distance may be generated with longer or shorter distance than without latency, in order to include processing latencies of the leader and/or the at least one follower vehicle parametrized as additional or missing distance.

In another example, the spatial and/or temporal condition is chosen in consideration of the processing latency arising from the communication between the leader vehicle and the at least one follower vehicle. In practice, this communication latency changes depending on outer circumstances such as network traffic volume, network reception quality, number of vehicles in the convoy, number of drive actions to be conveyed, which may be more inside the confines of a city than on a rural highway. The leader vehicle may be configured to monitor the latency and issue drive actions to alleviate rising latency if the latency reaches critical values. Such alleviating drive actions may be to increase the separating distance between the vehicles of the convoy and/or to lower the speed of the vehicles of the convoy, thereby ensuring safety even in the event of rising latency.

Furthermore, the processing latency may include a processing latency when generating the control command within the leader vehicle, e.g. due to communication with a vehicle control, an internal clock and location sensors. As the control command is processed in the at least one follower vehicle, further processing latency is added, which may be adjusted to.

The processing latency is an additional parameter to be adjusted to, while the spatial and/or temporal condition, jointly with the timestamp, allows to control the motion latency or path latency, i.e., the subsequent movement of vehicles.

In an embodiment, the leader vehicle is controlled manually and the control commands are generated automatically from the movements of the leader vehicle. In particular, the at least one follower vehicle may mirror the movements of the leader vehicle. In another embodiment, the movements of the leader vehicle are observed by the leader vehicle and translated into control commands for the at least one follower vehicle. The step of translating may comprise changes such as different time delays for braking and accelerating and/or, in particular flattening, filters concerning steering movements.

Particularly precise movements of at least one follower vehicle are possible if the method further comprises determining the distance travelled by the at least one follower vehicle since the time of a given timestamp by using odometry and/or by approximating the distance using speed data of the at least one follower vehicle recorded since the time of the given timestamp.

Odometry is the use of data from motion sensors to estimate change in position over time. In particular, the at least one follower vehicle may use a rotary encoder to detect wheel movement and determine the distance travelled by the vehicle. For example, a spatial and/or temporal condition may, according to a condition (x1), specify that the follower vehicle is to travel 6 meters from its position at the time of the timestamp. Due to the latency of producing, sending, receiving and decoding the control command, at the time the follower vehicles has decoded the timestamp, it may already have travelled further by 4 meters. Hence, the spatial and/or temporal condition will be fulfilled when the vehicle has travelled another 2 meters, completing the 6 meter travel distance specified in the command condition. Such distances may be approximated by odometry or by speed data.

Furthermore, in embodiments the method further comprises determining the leader vehicle's position at the time of a given timestamp by measuring the distance between the at least one follower vehicle and the leader vehicle, in particular at the time of the given timestamp, by at least one distance sensor and/or by approximating the distance using speed data of the leader vehicle and/or speed data of the at least one follower vehicle.

Determining the leader vehicle's position at the time of a given timestamp is of importance in particular for spatial and/or temporal conditions comprising condition (x2). By measuring the distance between the at least one follower vehicle and the leader vehicle, this distance is captured in a number, which may be further processed such as a condition (x1), e.g. by using odometry.

Furthermore, in embodiments, the method further comprises determining the location of the at least one follower vehicle, in particular with reference to an absolute coordinate system, by using a global navigation satellite system, wherein in particular the leader vehicle and the at least one follower vehicle exchange regularly current location data as reference, and/or by using a convoy coordinate system negotiated between the leader vehicle and the at least one follower vehicle, wherein in particular the convoy coordinate system is a linear coordinate system along the convoy's movement trajectory.

Making use of a global navigation satellite system or a convoy coordinate system allows for simple spatial and/or temporal conditions, such as a condition (x3) stating absolute coordinates. Thus, the distance between the leader vehicle and the at least one follower vehicle does not have to be measured during travel, but every vehicle may work with the coordinate system agreed upon.

A global navigation satellite system, for example, is GPS, Glonass, Galileo or Beidou. A convoy coordinate system may be a coordinate system used internally for the vehicle convoy. In an embodiment, the convoy coordinate system is a linear coordinate system, i.e., a path parametrized by a single coordinate. A possible choice is the trajectory of movement of the leader vehicle. In particular, the leader vehicle and the at least one follower vehicle agree on and/or obtain a common reference point within the convoy coordinate system as zero. If all vehicles move along a common path with a common reference for zero, the vehicles may communicate using absolute values of this common coordinate system. A common zero may be identified by an external signal, e.g. a light barrier, or may be fixed at given landmarks in a known environment.

The precision of using an absolute coordinate system is further improved, if the leader vehicle and the at least one follower vehicle, in particular regularly, exchange position data, in particular position data of the vehicles' current position. Thus, differences building up over time, e.g. because of imprecise odometry, may be levelled.

For obtaining precise timing in coordinating the movements of leader and follower vehicles, in embodiments each of the at least one follower vehicle and the leader vehicle each comprise an internal clock, wherein the method further comprises synchronizing the internal clock of each of the at least one follower vehicle with the internal clock of the leader vehicle, in particular by synchronizing the internal clock of each of the at least one follower vehicle with a predetermined external time server.

An internal clock may be a real-time clock (RTC). An external time server may be an internet time service, e.g. a service by Google or Microsoft. For example, the internal clocks are synchronized with an error of less than 10 milliseconds or less than 5 milliseconds or less than 1 millisecond.

In an embodiment, the leader vehicle and the at least one follower vehicle regularly exchange the current timestamps of their internal clocks and compare the values of the timestamps. Upon detecting differences exceeding a predefined synchronization limit, a synchronization of the internal clocks is performed.

In particular, time-based spatial and/or temporal conditions (t1) and (t2) make use of precise timing, which may be obtained by synchronizing the vehicles' internal clock.

A stable operation of the vehicle convoy is supported if the leader vehicle and the at least one follower vehicle maintain a communication connection, in particular via at least one of a wireless local area network, wireless personal area network, 4G mobile network and 5G mobile network, wherein in particular the method further comprises at least one of the following steps:
- the at least one follower vehicle acknowledging to the leader vehicle to have received a control command from the leader vehicle by transmitting a receipt,
- the at least one follower vehicle monitoring the communication connection and in case of fulfilling a termination condition stopping the at least one follower vehicle and/or notifying the leader vehicle, wherein in particular the termination condition is a loss of connection and/or connection latencies exceeding a predefined connection latency limit,
- the leader vehicle and/or the at least one follower vehicle regularly transmitting vehicle movement data to at least one other vehicle, wherein in particular vehicle movement data comprises position data and/or velocity data and/or acceleration data and/or time data of the respective vehicle.

The communication connection is in embodiments a permanent connection, which is upheld permanently while the method is performed, including the period of time between transmitting control commands. In an embodiment, the communication connection is a data tunnel between the leader vehicle and at least one follower vehicle. In particular, the communication connection comprises private network communication sent across a public network. A wireless personal area network may be one of Bluetooth or Zigbee.

Acknowledging the receipt of control commands and monitoring the communication connection allow to react if the communication connection is lost or suffers bad transmission conditions. For example, if the connection latency exceeds a predefined connection latency limit, e.g. 100 milliseconds, the at least one follower vehicle sends a warning to the leader vehicle and stops the follower vehicle. In other embodiments, the at least one follower vehicle acknowledges having performed a driving action by sending a receipt to the leader vehicle.

For an easier or optimized check of the spatial and/or temporal condition as well as for better determination of travelled distances, the vehicles may exchange vehicle movement data. In particular, the communication connection is maintained permanently, while between transmitting and receiving control commands, the vehicles exchange information about their respective journey. Data packets exchanged in the permanent connection may include information from follower vehicles to the leader vehicle and vice versa that include one or more of time stamps that may be used for measuring latency, position information, speed information, trajectory information, curve radius information, and vehicle status information, a.o.. In embodiments, vehicle movement data comprises physical quantities of the vehicle, e.g. size, weight, height. Furthermore, vehicle movement data may comprise a timestamp. In particular, the vehicle movement data is transmitted to at least one other vehicle, in particular the leader vehicle and/or at least one follower vehicle.

Furthermore, in embodiments the vehicle convoy comprises a leader vehicle and at least two follower vehicles. High operating efficiency of a vehicle convoy is achieved, if the method comprises
- the leader vehicle transmitting control commands directly to each follower vehicle and/or
- the leader vehicle transmitting control commands to at least one follower vehicle acting as control command relay, wherein the at least one follower vehicle receives the control commands and transmits the control commands to at least one further follower vehicle, and/or
- with the exception of the first leader vehicle and the last follower vehicle of the vehicle convoy, which act as leader vehicle and follower vehicle to their immediate predecessors and successors, respectively, exclusively, each vehicle acting simultaneously as follower vehicle to its immediate leading vehicle and as leader vehicle to its immediate trailing vehicle.

In case that each of the vehicles may serve as a leader vehicle, it is possible to split up the convoy and have a first group of vehicles go to a first destination and the remainder of the vehicles of the convoy proceeds to a second destination, led by the first vehicle of the second group. For example, the convoy may move as one unit until a fork in the path, at which point the convoy is split into two groups by decoupling a second part of the convoy from a first part. The first sub-convoy, led by the original leader vehicle, follows a first path leading from the fork into a first direction and the other sub-convoy, led by the first vehicle of the second sub-convoy, follows a second path leading in a second direction from the fork. This may be repeated several times, until each vehicle of the original convoy has reached its own destination.

In embodiments, the leader vehicle leads multiple follower vehicles simultaneously. For this, the leader vehicle may transmit control commands directed at more than one follower vehicle simultaneously or may transmit control commands direct at each follower vehicle individually.

At least one follower vehicle and/or the leader vehicle may be configured to comprise an emergency stop mechanism, wherein the vehicle checks its environment independently of the received control commands and upon fulfilling an emergency condition stopping the vehicle and/or sending a warning to the leader vehicle and/or at least one follower vehicle.

The object further is achieved by a vehicle, configured to act as leader vehicle and/or as follower vehicle in a method of operating a vehicle convoy as described above.

Such a vehicle holds the same advantages as the method described above. In order to avoid repetition, reference is made to the explanations above.

In particular, the vehicle is a follower vehicle, wherein the follower vehicle is a vehicle configured to follow a leader vehicle, wherein the follower vehicle is configured to act as follower vehicle in the method as described above. Furthermore, the vehicle may be a leader vehicle, wherein the leader vehicle is a vehicle configured to lead a follower vehicle, wherein the leader vehicle is configured to act as leader vehicle in the method as described above.

Additionally, the object is also achieved by a system for coupling the movements of at least two vehicles, comprising a leader vehicle and at least one follower vehicle, each vehicle comprising a control unit and an external communication unit, the control unit being configured to operate the vehicle according to one or more drive actions comprising at least one of steering, accelerating and braking the vehicle, the external communication unit being connected to the control unit and configured to communicate with an external communication unit of at least one other of the vehicles, wherein the control unit of at least the leader vehicle is configured to generate control commands for the at least one follower vehicle and transmitting the control commands to the at least one follower vehicle by means of the external communication unit, each control command comprising a current timestamp, a drive action to be performed by the at least one follower vehicle and a spatial and/or temporal condition to be fulfilled prior to carrying out the drive action, the drive action comprising at least one of steering the at least one follower vehicle, changing the speed of the at least one follower vehicle and setting the speed of the at least one follower vehicle, and wherein the control unit of the at least one follower vehicle is configured to operate the follower vehicle according to the drive actions embedded in the control commands.

Such a system offers the same advantages, features and characteristics as the method described above. In order to avoid repetition, reference is made to the explanations above.

In embodiments, each control unit of every vehicle is configured both to be able to generate and transmit control commands in a capacity as leader vehicle and to operate the vehicle according to drive actions embedded in control commands received from another leader vehicle in a capacity as follower vehicle. This ensures that every vehicle can act as leader vehicle or follower vehicle, thus providing flexibility in convoy operation.

In further embodiments, each control unit comprises an internal communication unit or interface for communicating with a CAN bus of the respective vehicle and/or control driving movements of the respective vehicle via the CAN bus, wherein in particular the internal communication unit or the control unit is configured to run a command control interface for communicating commands between the control unit and the CAN bus. A CAN bus is a Controller Area Network bus common to modern vehicles.

In particular, a command control interface is a automated valet parking (AVP) interface. In embodiments, a control command interface, in particular an AVP interface, is a software that translates commands for moving a vehicle into signals compatible with a CAN bus of the vehicle. Hence, a command control interface converts an external control command into a command that can be executed internally in the vehicle. Therefore, the internal communication unit may be configured to receive a control command and/or a drive action, to use the drive action as input for the command control interface and to transmit the output of the command control interface to the CAN bus, so that the vehicle performs the movement as described in the drive action.

Precise distance measurements are possible if the system further comprises an odometry unit for each vehicle, in particular at least one rotary encoder, for determining the distance travelled by the vehicle. In particular, an odometry unit is a wheel speed sensor. A rotary encoder may be part of an antilock braking system (ABS). In another embodiment, an odometry unit comprises a light barrier.

Furthermore, in embodiments, the system for coupling the movements of at least two vehicles further comprises at least one distance sensor, in particular for each vehicle, for measuring the distance between the at least one follower vehicle and the leader vehicle. Besides, a distance sensor may be configured for measuring the distance between two follower vehicles.

In another embodiment, the system for coupling the movements of at least two vehicles further comprises an internal clock for each vehicle, wherein the internal clocks are synchronized or configured to be synchronized with each other, in particular by synchronization with a predetermined external time server. This allows for precise timing of drive actions of the at least one follower vehicle, and therefore efficient transport.

Besides, the external communication units may be configured to communicate via at least one of a wireless local area network, a wireless personal area network, a 4G mobile network and a 5G mobile network. This yields the advantage of a stable communication connection between vehicles.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on exemplary embodiments, wherein reference is made expressly to the drawings with regard to the disclosure of all details according to the invention that are not explained in greater detail in the text. The drawings show in:
- Fig. 1.1 - 1.4: a schematic view from above of a vehicle convoy at subsequent positions,
- Fig. 2: a flow chart of a first embodiment of a method of operating a vehicle convoy,
- Fig. 3: a schematic diagram evolving in time of a moving vehicle convoy, and
- Fig. 4: a schematic view of a first embodiment of a vehicle.

In the drawings, the same or similar types of elements or respectively corresponding parts are provided with the same reference numbers in order to prevent the item from needing to be reintroduced.

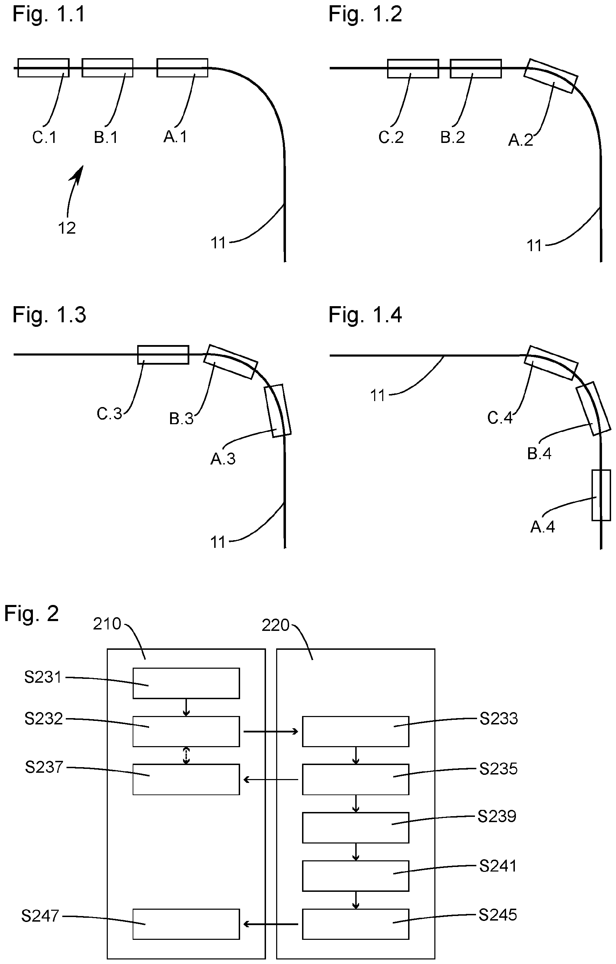

Fig. 1, including subfigures Fig. 1.1 to 1.4, depicts a schematic view from above of a vehicle convoy 12 at subsequent positions in time. Fig. 1.1 shows the first position and Fig 1.4 depicts the last position.

The vehicles A, B and C move along a path 11. The path 11 may also be referred to as trajectory or movement trajectory. Vehicle A is the leader vehicle, which is operated in this example by a human driver. The leader vehicle A is followed by two follower vehicles B, C.

The follower vehicles B, C follow the leader vehicle A around a bend or curve in the path 11. In order to do so, the method of operating a vehicle convoy according to the present disclosure is applied. For example, the leader vehicle A transmits multiple control commands for steering into a new direction to follower vehicles B, C in the course of driving around the corner.

In this example, leader vehicle A establishes a communication connection with follower vehicle B and another communication connection with follower vehicle C or uses pre-established communication connections. Leader vehicle A acts simultaneously as leader vehicle for both follower vehicles B, C, but generates control commands specifically for either follower vehicle B or follower vehicle C. Alternatively, the same control commands may be sent to follower vehicles B and C, if the spatial and/or temporal conditions are formulated such that the drive actions contained in the control commands can be carried out by follower vehicles B and C in the same way and at the same absolute location, in order to follow the leader vehicle A around the curve.

In another embodiment, which is not shown, vehicle A may act as leader vehicle for vehicle B and vehicle B may act as follower vehicle for vehicle A and simultaneously as leader vehicle for vehicle C. In that case, vehicle C is a follower vehicle of vehicle B. Hence, a chain of pairs of leader and follower vehicle is formed within the vehicle convoy.

The operation of the vehicle convoy shown in subfigures 1.1 to 1.4 is as follows. In Fig. 1.1, the convoy approaches the bend in the path 11, led by leader vehicle A at position A.1, followed by follower vehicles B at position B.1 and C at position C.1. The distance from leader vehicle A to follower vehicle B is slightly greater than from follower vehicle B to follower vehicle C for safety reasons and in order to account for latency in the communication connection between the vehicles.

Fig. 1.2 depicts the situation where leader vehicle A has entered the bend at position A.2, whereas follower vehicles B and C are still in a straight section of path 11. At this point in time, leader vehicle A will have formulated and transmitted a control command to follower vehicles B and C indicating the actions required to take the bend. Further control commands may be formulated and transmitted during the course of the travel of leader vehicle A through the bend in path 11.

In Fig. 1.3, follower vehicle B has entered the bend, whereas leader vehicle A is near the end of the bend. At the depicted point in time, follower vehicle B's position B.3 is the same as leader vehicle A's position A.2 shown in previous Fig. 1.2. Follower vehicle C may have received a control command to brake in order to avoid running into follower vehicle B, which has reduced the speed in the bend in path 11.

Fig. 1.4 depicts the positions A.4, B.4 and C.4 of vehicles A, B and C at a later point in time where follower vehicle C has reached the same position A.2 at the entrance of the curve as the leader vehicle A had at the point in time depicted in Fig. 1.2. As has been the case in all instances of Fig. 1, follower vehicle C keeps a smaller distance from follower vehicle B in Fig. 1.4 than follower vehicle B keeps from leader vehicle A. At this later point in time, the leader vehicle A has exited the bend and accelerated away from the follower vehicles B and C, which will follow with their own acceleration once they have cleared the bend.

Fig. 2 shows a flow chart of a first embodiment of a method of operating a vehicle convoy 12. In this embodiment, the vehicle convoy 12 comprises two vehicles, a leader vehicle 210 and a follower vehicle 220. The steps of the method are depicted within the vehicle, by which they are performed.

First, the leader vehicle 210 generates a control command (step S231) including a current timestamp and a drive action to be performed by the follower vehicle 220. Furthermore, the control command comprises a spatial and/or temporal condition. Here, the leader vehicle 210 generates a spatial and/or temporal condition of type (x2), i.e., the leader vehicle 210 requests the follower vehicle 220 to perform a drive action at the current leader vehicle's position. The drive action is, e.g., accelerating to a velocity 10 km/h higher than previously.

The control command is transmitted to the follower vehicle 220 (step S232) and the follower vehicle 220 receives the control command (Step S233). Subsequently, the follower vehicle 220 sends an acknowledgment signal to the leader vehicle 210, acknowledging that the control command was received successfully (step S235). The leader vehicle 210 receives the acknowledgment signal (step S237). If leader vehicle 210 does not receive an acknowledgement signal within a pre-specified time frame, it resends the control command in a repeat of step S 232. In case of repeated failures to receive acknowledgements, leader vehicle 210 may order the follower vehicles 220 of the convoy to come to a halt and/or come to a halt itself, relying on the follower vehicles' ability to use their radar or LIDAR range detection systems to keep their minimum distance from the leader vehicle 220.

After having received the control command, the follower vehicle 220 checks if the spatial and/or temporal condition embedded therein is fulfilled (step S239). For this, the follower vehicle 220 is required to identify the leader vehicle's position of the time of the timestamp according to the spatial and/or temporal condition being of type (x2). Subsequently, the follower vehicle 220 has to check when it has reached this position.

Here, for fulfilling this task, the follower vehicle 220 records the distance between the leader vehicle 210 and the follower vehicle 220 over time and stores the determined values together with corresponding timestamps. When receiving the control command of the leader vehicle 210, the follower vehicle 220 looks up its records and identifies the distance between the follower vehicle 220 and the leader vehicle 210 at the time of the timestamp.

Having determined this distance, the spatial and/or temporal condition may be processed like a condition of type (x1). In this embodiment, the follower vehicle 220 uses odometry for approximating the distance travelled by the follower vehicle 220. For example, the follower vehicle 220 identifies that 30% of the distance between the follower vehicle 220 and the leader vehicle 210 at the time of the timestamp have already been travelled when receiving the control command in step S233. Thus, the follower vehicle has to travel the remaining 70% of the distance to fulfill the spatial and/or temporal condition.

Then, when the condition is fulfilled, the follower vehicle 220 carries out the drive action comprised in the control command (step S241), i.e., accelerates the follower vehicle 220 by 10 km/h. This may be accompanied by positioning the follower vehicle 220 at a specified distance to the leader vehicle 210.

Finally, the follower vehicle 220 acknowledges having performed the drive action (step S245) by transmitting an acknowledgement to the leader vehicle 210, which receives the drive action acknowledgment (step S247). Such drive action acknowledgement may comprise further information, such as the follower vehicle's actual speed and distance to the leader vehicle 210. Such information may also be exchanged on a regular basis via a permanent communication connection between the vehicles 210, 220 of the convoy.

In other embodiments of the invention, the leader vehicle 210 generates control commands with other spatial and/or temporal conditions (step S231). The spatial and/or temporal condition may be chosen in consideration of the drive action requested from the follower vehicle 220.

For example, when both vehicles 210, 220 have stopped at a traffic light and, when green light shows, restart their journey, a different behavior may be required than when making small steering corrections while travelling on a highway.

For a drive action comprising braking, the spatial and/or temporal condition, e.g., is a short time delay in a range of 20 ms to 200 ms. For a drive action comprising accelerating, the spatial and/or temporal condition, may be a longer time delay than for braking, e.g. a time delay in a range of 100 ms to 1000 ms. For a drive action comprising steering, the spatial and/or temporal condition, e.g., a condition of type (x1) or type (x2).

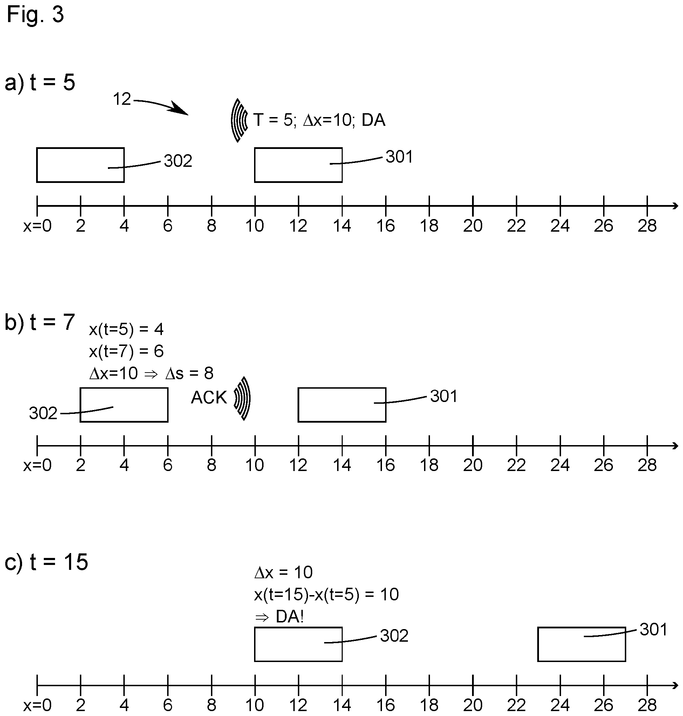

Fig. 3 depicts a schematic diagram evolving in time of a moving vehicle convoy 12. Fig. 3 shows the vehicle convoy 12 at (a) a time t=5, (b) a time t=7 and (c) a time t=15. A leader vehicle 301 and a follower vehicle 302 move along a position axis (x), labelled with positions x=0 to x=28. The units of time may be seconds and the units of position may be meters.

In Fig. 3a), both vehicles 301, 302 travel with a given speed along the x-axis. The leader vehicle 301 is positioned at x=14 (front of vehicle) and the follower vehicle 302 is located at x=4. The leader vehicle 301 transmits a control command comprising a timestamp T of T=5, i.e., the timestamp T corresponds to the current time t=5. Furthermore, the control command comprises a distance Δx to be travelled by the follower vehicle 302 since the timestamp T as spatial and/or temporal condition. Besides, the control command comprises a drive action DA, e.g. accelerating the follower vehicle 302.

Fig. 3b) depicts the follower vehicle 302 receiving the control command. During the time of transmission, the follower vehicle 302 has travelled to a position x=6. When receiving the control command, the follower vehicle 302 acknowledges the receipt by an acknowledgment signal (ACK).

The follower vehicle 302 processes the control command including its condition of having travelled Δx=10. The follower vehicle 302 checks, when this condition is fulfilled. By using odometry, the follower vehicle 302 determines its position x at t=5 to be x(t=5)=4 and the position x at t=7 to be x(t=7)=6. Thus, the follower vehicle 302 has travelled 2 units since the time of the timestamp T=5.

Therefore, the follower vehicle 302 determines that for fulfilling the spatial and/or temporal condition, a remaining distance of Δs = 8 has to be travelled.

Fig. 3c) shows the vehicle convoy 12 at time t=15. The follower vehicle 302 has travelled in total 10 units since time t=5, which is the time of the timestamp T. Hence, the spatial and/or temporal condition is fulfilled and the follower vehicle 302 carries out the drive action DA, depicted by "DA!", i.e., in this embodiment accelerates the follower vehicle 302.

In the meantime, the leader vehicle 301 has travelled to position x=27, having accelerated in the meantime. As the follower vehicle 302, in the same amount of time, has moved by 10 units, this shows that the leader vehicle 301 has increased its speed earlier than the follower vehicle 302.

A spatial and/or temporal condition may also be of type (x3) or type (t2), i.e., that the follower vehicle 302 has travelled to given absolute coordinates or an absolute point in time is reached.

In the example shown in Fig. 3, both vehicles 301, 302 each comprise internal clocks, which are synchronized via an external time server via the internet. Therefore, both vehicles 301, 302 can use the absolute time, being t=5, t=7 and t=15 for the subfigures of Fig. 3, as reference.

In a similar manner, both vehicles 301, 302 may use the position coordinate x as convoy coordinate system. If both vehicles 301, 302 have a common reference for x=0, the position coordinate acts as absolute coordinate. A common reference may be identified by a light barrier at a fixed point in space. Alternatively, at any place a common reference may be determined by precisely measuring the distance between both vehicles 301, 302, in particular with both vehicles 301, 302 being stopped, and exchanging the measured distance between the vehicles 301, 302. The position coordinate x is not limited to a straight coordinate system, but may follow curved parts of the convoy's trajectory, such as the bend depicted in Fig. 1.

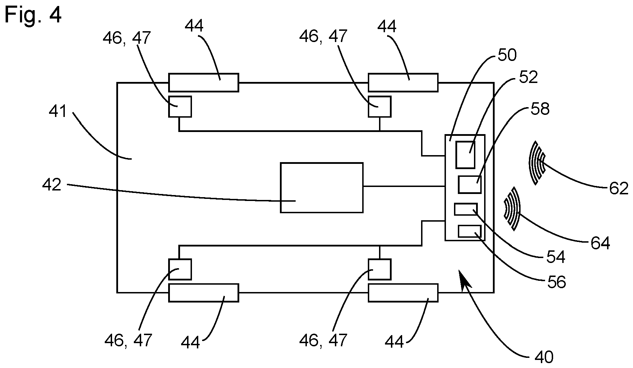

Fig. 4 shows a schematic view of a first embodiment of a vehicle 41 comprising a part of a system 40 for coupling the movements of at least two vehicles 41.

The vehicle 41 comprises a CAN bus 42 for controlling the vehicle 41. The CAN bus 42 is connected to a control unit 50 for operating the vehicle 41 according to a control command.

The control unit 50 comprises an external communication unit 52 for transmitting and/or receiving control commands 62, 64. The external communication unit 52 may also be configured to transmit and receive acknowledgement signals. Furthermore, the control unit 50 comprises an internal communication unit 54, e.g. to communicate with the CAN bus 42. In this example, the internal communication unit 54 is configured to run a command control interface for communicating commands between the control unit 50 and the CAN bus 42. The command control interface is an AVP interface that translates the requested drive actions into commands suitable for processing by the CAN bus 42. As the AVP interface is a software run by the internal communication unit 54, it is not depicted in Fig. 4.

Besides, the control unit 50 comprises an internal clock 56 as well as at least a distance sensor 58 for measuring the distance between the vehicle 41 and another vehicle 41. While in Fig. 4 the distance sensor 58 is depicted in the front of the vehicle 41, the distance sensor may, e.g., be positioned in the back of a vehicle 41 for measuring a distance to a following vehicle 41.

The vehicle 41 further comprises four wheels 44, wherein each wheel 44 is equipped with an odometry unit 46 designed as a rotary encoder 47. The rotary encoders 47 are connected to the control unit 50, allowing for processing the travelled distances that have been measured. The rotary encoders 47 may operate at 32, 64 or other numbers of pulses per turn. The more precise the information obtained by the rotary encoders 47 or other odometry units 46, the more exact is the determination of travelled distance by the vehicle 41. Furthermore, the odometry information of multiple wheels 44 may be combined for obtaining more precise distance values.

In an embodiment, the CAN bus 42 may operate with a frequency of 50 Hz. Hence, each time slot of operation has a duration of 20 ms. This means that if the control unit 50 receives a control command with a spatial and/or temporal condition to be executed immediately, e.g. for braking the follower vehicle, the time delay would only be very few cycles of operation of the CAN bus 42, i.e., 20 ms or only little more. At a speed of 100 km/h, a cycle of 20 ms is equivalent to a travel distance of ca. 0.56 m, illustrating that it is advantageous to use greater vehicle distances at greater speeds in order to keep a couple of cycles' reaction time, which is still much faster than human reaction times could ever be.

Fig. 4 only depicts a part of a system 40 for coupling the movements of at least two vehicles. A second part of such a system 40 would be comprised by a second vehicle 41, which may have a very similar setup. The at least two control units 50 of the system 40 are configured to communicate with each other, e.g. transmitting and receiving control commands.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

### List of References

- A: Leader vehicle
- B, C: Follower vehicle
- A.1 - A.4: positions of vehicle A
- B.1 - B.4: positions of vehicle B
- C.1 - C.4: positions of vehicle C
- t: time
- x: position
- T: timestamp
- Δx: distance travelled since timestamp
- Δs: remaining distance
- DA: drive action
- ACK: acknowledgment
- 11: path
- 12: vehicle convoy
- 40: System
- 41: Vehicle
- 42: CAN bus
- 44: wheel
- 46: odometry unit
- 47: rotary encoder
- 50: control unit
- 52: external communication unit
- 54: internal communication unit
- 56: internal clock
- 58: distance sensor
- 62: received control command
- 64: transmitted control command
- 210: Leader vehicle
- 220: Follower vehicle
- S231: generating a control command
- S232: transmitting the control command
- S233: receiving the control command
- S235: acknowledging receiving control command
- S237: receiving acknowledgement signal
- S239: checking if spatial and/or temporal condition is fulfilled
- S241: carrying out the drive action
- S245: acknowledging having performed the drive action
- S247: receiving drive action acknowlegdement
- 301: leader vehicle
- 302: follower vehicle

## Claims

1. Method of operating a vehicle convoy, the vehicle convoy (12) comprising a leader vehicle (A, 210, 301) and at least one follower vehicle (B, C, 220, 302) following the leader vehicle (A, 210, 301), wherein the method comprises the following steps:
- the leader vehicle (A, 210, 301) generating a control command for the at least one follower vehicle (B, C, 220, 302), wherein the control command comprises a current timestamp (T) and a drive action (DA) to be performed by the at least one follower vehicle (B, C, 220, 302) and a spatial and/or temporal condition to be fulfilled prior to carrying out the drive action (DA), wherein the drive action (DA) comprises at least one of steering the at least one follower vehicle (B, C, 220, 302), changing the speed of the at least one follower vehicle (B, C, 220, 302) and setting the speed of the at least one follower vehicle (B, C, 220, 302),
- the leader vehicle (A, 210, 301) transmitting the control command to the at least one follower vehicle (B, C, 220, 302),
- the at least one follower vehicle (B, C, 220, 302) receiving the control command from the leader vehicle (A, 210, 301),
- the at least one follower vehicle (B, C, 220, 302) carrying out the drive action (DA) comprised in the received control command when the spatial and/or temporal condition comprised in the received control command is fulfilled.

2. Method of operating a vehicle convoy (12) according to claim 1, wherein the spatial and/or temporal condition is at least one of
| | |
|---|---|
| (x1) | that the at least one follower vehicle (B, C, 220, 302) has travelled a given distance (Δx) since the time of the timestamp (T), wherein in particular the given distance is specified by the leader vehicle (A, 210, 301), |
| (x2) | that the at least one follower vehicle (B, C, 220, 302) has travelled to the leader vehicle's position of the time of the timestamp (T), wherein in particular the leader vehicle's position of the time of the timestamp (T) is determined by the at least one follower vehicle (B, C, 220, 302), |
| (x3) | that the at least one follower vehicle (B, C, 220, 302) has travelled to given absolute coordinates, |
| (t1) | that a given period of time has passed since the time of the timestamp (T), wherein in particular the given period of time is determined by the leader vehicle (A, 210, 301) or the at least one follower vehicle (B, C, 220, 302), and |
| (t2) | that a given absolute point in time is reached. |

3. Method of operating a vehicle convoy (12) according to claim 1 or 2, the method further comprising the leader vehicle (A, 210, 301) choosing the spatial and/or temporal condition and/or the point in time for transmitting the control command in consideration of the drive action (DA) and/or of a processing latency of processing the control command within the vehicle convoy (12), wherein in particular the processing latency is a latency of generating the control command in the leader vehicle (A, 210, 301) and/or communicating between leader vehicle (A, 210, 301) and the at least one follower vehicle (B, C, 220, 302) and/or processing the control command in the at least one follower vehicle (B, C, 220, 302).

4. Method of operating a vehicle convoy (12) according to one of claims 1 to 3, the method further comprising determining the distance travelled by the at least one follower vehicle since the time of a given timestamp (T) by using odometry and/or by approximating the distance using speed data of the at least one follower vehicle (B, C, 220, 302) recorded since the time of the given timestamp (T).

5. Method of operating a vehicle convoy (12) according to one of claims 1 to 4, the method further comprising determining the leader vehicle's position at the time of a given timestamp (T) by measuring the distance between the at least one follower vehicle (B, C, 220, 302) and the leader vehicle (A, 210, 301), in particular at the time of the given timestamp (T), by at least one distance sensor (58) and/or by approximating the distance using speed data of the leader vehicle (A, 210, 301) and/or speed data of the at least one follower vehicle (B, C, 220, 302).

6. Method of operating a vehicle convoy (12) according to one of claims 1 to 5, the method further comprising determining the location of the at least one follower vehicle (B, C, 220, 302), in particular with reference to an absolute coordinate system, by using a global navigation satellite system, wherein in particular the leader vehicle (A, 210, 301) and the at least one follower vehicle (B, C, 220, 302) exchange regularly current location data as reference, and/or by using a convoy coordinate system negotiated between the leader vehicle (A, 210, 301) and the at least one follower vehicle (B, C, 220, 302), wherein in particular the convoy coordinate system is a linear coordinate system along the vehicle convoy's movement trajectory.

7. Method of operating a vehicle convoy (12) according to one of claims 1 to 6, wherein each of the at least one follower vehicle (B, C, 220, 302) and the leader vehicle (A, 210, 301) each comprise an internal clock (56), wherein the method further comprises synchronizing the internal clock (56) of each of the at least one follower vehicle (B, C, 220, 302) with the internal clock (56) of the leader vehicle (A, 210, 301), in particular by synchronizing the internal clock (56) of each of the at least one follower vehicle (B, C, 220, 302) with a predetermined external time server.

8. Method of operating a vehicle convoy (12) according to one of claims 1 to 7, wherein the leader vehicle (A, 210, 301) and the at least one follower vehicle (B, C, 220, 302) maintain a communication connection, in particular via at least one of a wireless local area network, wireless personal area network, 4G mobile network and 5G mobile network, wherein in particular the method further comprises at least one of the following steps:
- the at least one follower vehicle (B, C, 220, 302) acknowledging to the leader vehicle (A, 210, 301) to have received a control command from the leader vehicle (A, 210, 301) by transmitting a receipt,
- the at least one follower vehicle (B, C, 220, 302) monitoring the communication connection and in case of fulfilling a termination condition stopping the at least one follower vehicle (B, C, 220, 302) and/or notifying the leader vehicle (A, 210, 301), wherein in particular the termination condition is a loss of connection and/or connection latencies exceeding a pre-defined connection latency limit,
- the leader vehicle (A, 210, 301) and/or the at least one follower vehicle (B, C, 220, 302) regularly transmitting vehicle movement data to at least one other vehicle (A, B, C, 41, 210, 220, 301, 302), wherein in particular vehicle movement data comprises position data and/or velocity data and/or acceleration data and/or time data of the respective vehicle (A, B, C, 41, 210, 220, 301, 302).

9. Method of operating a vehicle convoy (12) according to one of claims 1 to 8, in particular the vehicle convoy (12) comprising a leader vehicle (A, 210, 301) and at least two follower vehicles (B, C, 220, 302), wherein the method comprises
- the leader vehicle (A, 210, 301) transmitting control commands directly to each follower vehicle (B, C, 220, 302) and/or
- the leader vehicle (A, 210, 301) transmitting control commands to at least one follower vehicle (B, C, 220, 302) acting as control command relay, wherein the at least one follower vehicle (B, C, 220, 302) receives the control commands and transmits the control commands to at least one further follower vehicle (B, C, 220, 302), and/or
- with the exception of the first leader vehicle (A, 210, 301) and the last follower vehicle (B, C, 220, 302) of the vehicle convoy (12), which act as leader vehicle (A, 210, 301) and follower vehicle (B, C, 220, 302) to their immediate predecessors and successors exclusively, each vehicle (A, B, C, 41, 210, 220, 301, 302) acting simultaneously as follower vehicle (B, C, 220, 302) to its immediate leading vehicle (A, 210, 301) and as leader vehicle (A, 210, 301) to its immediate trailing vehicle (A, B, C, 41, 210, 220, 301, 302).

10. Vehicle (A, B, C, 41, 210, 220, 301, 302), configured to act as leader vehicle (A, 210, 301) and/or as follower vehicle (B, C, 220, 302) in a method of operating a vehicle convoy (12) according to one the claims 1 to 9.

11. System (40) for coupling the movements of at least two vehicles (A, B, C, 41, 210, 220, 301, 302), comprising a leader vehicle (A, 210, 301) and at least one follower vehicle (B, C, 220, 302), each vehicle (A, B, C, 41, 210, 220, 301, 302) comprising a control unit (50) and an external communication unit (52), the control unit (50) being configured to operate the vehicle (A, B, C, 41, 210, 220, 301, 302) according to one or more drive actions (DA) comprising at least one of steering, accelerating and braking the vehicle,
the external communication unit (52) being connected to the control unit (50) and configured to communicate with an external communication unit (52) of at least one other of the vehicles,
wherein the control unit (50) of at least the leader vehicle (A, 210, 301) is configured to generate control commands for the at least one follower vehicle (B, C, 220, 302) and transmitting the control commands to the at least one follower vehicle (B, C, 220, 302) by means of the external communication unit (52), each control command comprising a current timestamp (T), a drive action (DA) to be performed by the at least one follower vehicle (B, C, 220, 302) and a spatial and/or temporal condition to be fulfilled prior to carrying out the drive action (DA), the drive action (DA) comprising at least one of steering the at least one follower vehicle (B, C, 220, 302), changing the speed of the at least one follower vehicle (B, C, 220, 302) and setting the speed of the at least one follower vehicle (B, C, 220, 302), and wherein the control unit (50) of the at least one follower vehicle (B C, 220, 302) is configured to operate the follower vehicle (B, C, 220, 302) according to the drive actions (DA) embedded in the control commands.

12. System (40) for coupling the movements of at least two vehicles (A, B, C, 41, 210, 220, 301, 302) according to claim 11, wherein each control unit (50) of every vehicle is configured both to be able to generate and transmit control commands in a capacity as leader vehicle (A, 41, 210, 301) and to operate the vehicle (A, B, C, 41, 210, 220, 301, 302) according to drive actions embedded in control commands received from another leader vehicle (A, 41, 210, 301) in a capacity as follower vehicle (B, C, 220, 302).

13. System (40) for coupling the movements of at least two vehicles (A, B, C, 41, 210, 220, 301, 302) according to claim 11 or 12, wherein each control unit (50) comprises an internal communication unit (54) or interface for communicating with a CAN bus (42) of the respective vehicle (A, B, C, 41, 210, 220, 301, 302) and/or control driving movements of the respective vehicle (A, B, C, 41, 210, 220, 301, 302) via the CAN bus (42), wherein in particular the internal communication unit (54) or the control unit (50) is configured to run a command control interface for communicating commands between the control unit (50) and the CAN bus (42).

14. System (40) for coupling the movements of at least two vehicles (A, B, C, 41, 210, 220, 301, 302) according to one of claims 11 to 13, further comprising an odometry unit (46) for each vehicle (A, B, C, 41, 210, 220, 301, 302), in particular at least one rotary encoder (47), for determining the distance travelled by the vehicle (A, B, C, 41, 210, 220, 301, 302).

15. System (40) for coupling the movements of at least two vehicles (A, B, C, 41, 210, 220, 301, 302) according to one of claims 11 or 14, further comprising at least one distance sensor (58), in particular for each vehicle (A, B, C, 41, 210, 220, 301, 302), for measuring the distance between the at least one follower vehicle (B, C, 220, 302) and the leader vehicle (A, 210, 301).

16. System (40) for coupling the movements of at least two vehicles (A, B, C, 41, 210, 220, 301, 302) according to one of claims 11 to 15, further comprising an internal clock (56) for each vehicle (A, B, C, 41, 210, 220, 301, 302), wherein the internal clocks (56) are synchronized or configured to be synchronized with each other, in particular by synchronization with a predetermined external time server.

17. System (40) for coupling the movements of at least two vehicles (A, B, C, 41, 210, 220, 301, 302) according to one of claims 11 to 16, wherein the external communication units (52) are configured to communicate via at least one of a wireless local area network, a wireless personal area network, a 4G mobile network and a 5G mobile network.
